# EUROPÄISCHE PATENTSCHRIFT

(11) **EP 3 106 019 B1**
(45) Veröffentlichungstag und Bekanntmachung des Hinweises auf die Patenterteilung: **20.05.2020**
(21) Anmeldenummer: 16171879.6
(22) Anmeldetag: 30.05.2016
(51) Int. Cl.: A01F 15/07

(54) **RUNDBALLENPRESSE UND ZUFÜHRWALZE FÜR WICKELMATERIAL**
ROUND BALER AND FEEDING ROLLER FOR WRAPPING MATERIAL
PRESSE À BALLE RONDE ET ROULEAU DE GUIDAGE POUR MATÉRIEL D'ENRUBANNAGE

(30) Priorität: 16.06.2015 DE 102015211003
(43) Veröffentlichungstag der Anmeldung: 21.12.2016
(73) Patentinhaber: Deere & Company, Moline, IL 61265 (US)
(72) Erfinder: Gresset, Pascal, 25870 Auxon Dessous (FR); Anstey, Henry D, Ottumwa, IA 52501 (US)
(74) Vertreter: Holst, Sönke

(56) Entgegenhaltungen:
- EP-A1- 1 872 648
- DE-A1- 4 037 040
- DE-C1- 3 815 985
- GB-A- 2 163 701
- US-A- 5 129 208

## Beschreibung

Die Erfindung betrifft eine Rundballenpresse gemäß dem Oberbegriff des Anspruchs 1.

### Stand der Technik

Rundballenpressen finden Verwendung, um aus halmförmigem landwirtschaftlichem Erntegut Ballen herzustellen. Derartige Rundballenpressen weisen einen Ballenpressraum und zugehörige Pressmittel auf. Nach der Fertigstellung und ggf. Umwicklung eines Ballens mit Netz, Garn oder einer Folie wird dieser nach hinten aus dem Ballenpressraum ausgeworfen.

Wird ein flächiges Wickelmaterial wie Netz oder Folie verwendet, wird dieses im Stand der Technik über eine Zuführwalze geführt, die üblicherweise mit einem Gummimaterial o. dgl. beschichtet ist, um einen hohen Reibungskoeffizienten bereitzustellen. Diese Zuführwalze wird mit einer Umfangsgeschwindigkeit angetrieben, die um einen gewissen Prozentsatz kleiner als die Umfangsgeschwindigkeit der Ballenpressmittel (und somit des Ballens) ist, um eine gewünschte Spannung im Wickelmaterial aufrecht zu erhalten. Derartige Zuführwalzen sind im Stand der Technik zylindrisch (vgl. DE 102 11 412 A1 oder GB 2 163 701 A mit einem angetriebenen Zuführwalzenpaar) oder allenfalls im mittigen Bereich mit einer Rändelung versehen, um das Einführen des Wickelmaterials in den Ballenpressraum zu erleichtern (DE 100 45 842 A2).

Die EP 1 872 648 A1 zeigt eine Ballenpresse, bei der das Wickelmaterial zwischen dem Vorrat und einem angetriebenen Zuführwalzenpaar, welches das Wickelmaterial in den Ballenpressraum einführt, über eine frei mitlaufende Filmverbreiterungswalze geführt wird, die das Wickelmaterial seitlich strecken soll. Die Filmverbreiterungswalze ist als Doppelkonus ausgeführt und hat in der Mitte einen größeren Durchmesser als außen.

Eine ähnliche Ballenpresse mit einer Walze zum Breitstrecken des Wickelmaterials wird in der DE 40 37 040 A1 gezeigt. Die Walze zum Breitstrecken des Wickelmaterials ist ebenfalls frei mitlaufend zwischen dem Vorrat und einem angetriebenen Zuführwalzenpaar positioniert, welche das Wickelmaterial in den Ballenpressraum einführt.

Die US 5 129 208 A zeigt eine Ballenpresse, bei der das Wickelmaterial vom Vorrat kommend zwischen einer angetriebenen Walze und einer frei mitlaufende Ausbreitungswalze durchgeführt wird. Schließlich wird das Wickelmaterial zwischen zwei angetriebenen Riemen durchgeführt, die es in den Ballenpressraum fördern. Die Ausbreitungswalze ist mit Wendeln versehen, die das Wickelmaterial nach außen führen sollen.

Schließlich zeigt die DE 3815 985 C1 eine Verpackungsmaschine, bei eine vom Vorrat abgewickelte Kunststoff-Streckfolienbahn über zwei angetriebene, konische Walzen geführt wird, die das Material in der Mitte stärker als am Rand strecken. Stromab der Walzen folgen noch weitere Umlenkwalzen.

### Aufgabe

Falls der Ballen bei über die Breite ungleichmäßiger Beaufschlagung des Ballenpressraums nicht genau zylindrisch, sondern konisch oder tonnenförmig ist, kann es vorkommen, dass eine oder beide seitlichen Ränder des Ballens mit einer langsameren Umfangsgeschwindigkeit rotieren als die Zuführwalze. Das führt dazu, dass das Wickelmaterial nicht hinreichend straff an den Rändern des Ballens anliegt, um ihn zusammenzuhalten, sodass der Ballen dort schließlich zerfällt.

Ähnliche Probleme können auftreten, wenn die Vorratsrolle des Wickelmaterials nach dem Abschneiden noch etwas weiterdreht und sich am Rand des Wickelmaterials Schlaufen bilden.

Die Anordnungen nach EP 1 872 648 A1, DE 40 37 040 A1, US 5 129 208 A und DE 3815 985 C1 können das Problem nicht lösen, denn stromab der zum Verbreitern des Wickelmaterial angeordneten Walzen folgen jeweils noch weitere, zylindrische Walzen, die das Wickelmaterial antreiben und dessen Geschwindigkeit vorgeben.

Das der Erfindung zugrunde liegende Problem wird darin gesehen, eine Rundballenpresse bereitzustellen, bei der die oben erwähnten Nachteile nicht oder in einem verminderten Maß vorliegen.

### Lösung

Die vorliegende Erfindung wird durch die Patentansprüche definiert.

Eine Rundballenpresse ist mit einem Ballenpressraum, einem Vorrat für Wickelmaterial und einer Zuführwalze ausgestattet, die mit einer vorgegebenen Drehzahl in Drehung versetzbar ist, um die Geschwindigkeit vorzugeben, mit welcher das Wickelmaterial von dem Vorrat in den Ballenpressraum eingebracht wird. Die Breite der Zuführwalze stimmt in der Regel zumindest näherungsweise mit der Breite des Wickelmaterials und des Ballenpressraums überein, sodass die seitlichen Randbereiche des Wickelmaterials, die schließlich zur Anlange an den axialen äußeren Rändern des Ballens kommen, mit den axialen Randbereichen der Zuführwalze zusammenwirken. Die Zuführwalze weist im axial mittigen Bereich einen größeren Durchmesser auf als in ihren axialen Randbereichen.

Mit anderen Worten ist die Zuführwalze nicht zylindrisch, sondern an ihren Randbereichen gegenüber ihrer Mitte mit einem kleineren Durchmesser versehen. Dadurch erreicht man, dass die Fördergeschwindigkeit, mit welcher die Zuführwalze das Wickelmaterial in den Ballenpressraum bewegt (d.h. zu Beginn des Wickelvorgangs in den Ballenpressraum hineinfördert und anschließend, wenn der Ballen das Wickelmaterial erfasst hat und aufgrund seiner höheren Umfangsgeschwindigkeit bestrebt ist, das Wickelmaterial von der Zuführwalze abzuziehen, freigibt), am Rand des Wickelmaterials kleiner ist als an dessen Mitte. Auf diese Weise ist auch dann, wenn der Ballen nicht zylindrisch, sondern konisch oder tonnenförmig ist, sichergestellt, dass die Fördergeschwindigkeit des Wickelmaterials in den Randbereichen nicht größer ist als die Umfangsgeschwindigkeit des Ballens. Die Ränder des Ballens werden demnach auch in derartigen Fällen hinreichend straff umwickelt Die im Stand der Technik auftretenden Probleme treten somit nicht oder zumindest in einem verminderten Umfang auf.

Die axialen Randbereiche der Zuführwalze können einen ersten, über ihre axiale Abmessung konstanten Durchmesser aufweisen, während der mittige Bereich der Zuführwalze einen zweiten, über seine axiale Abmessung konstanten Durchmesser aufweist. Die Zuführwalze ist somit stufenförmig gestaltet. Bei einer anderen Ausführungsform kann die Zuführwalze jedoch insgesamt zigarrenförmig, ballig oder als Doppelkonus geformt sein. Auch Zwischenformen, d.h. mit konischen oder als halbe Zigarre oder ballig ausgeformten Randbereichen und zylindrischem mittigem Bereich oder konischen oder halbzigarrenförmigen oder balligen Übergängen zwischen zylindrischen Randbereichen und dem zylindrischen mittigen Bereich sind denkbar.

Das Wickelmaterial ist insbesondere ein Netz.

### Ausführungsbeispiel

In den Zeichnungen ist ein nachfolgend näher beschriebenes Ausführungsbeispiel der Erfindung dargestellt, wobei die Bezugszeichen nicht zu einer einschränkenden Auslegung der Ansprüche herangezogen werden sollen. Es zeigt:
- Fig. 1: eine schematische seitliche Ansicht einer Rundballenpresse, und
- Fig. 2: eine Draufsicht auf die Hüllvorrichtung der Rundballenpresse mit einer Vorratsrolle des Wickelmaterials und einer zugehörigen Zuführwalze zum Transport des Wickelmaterials.

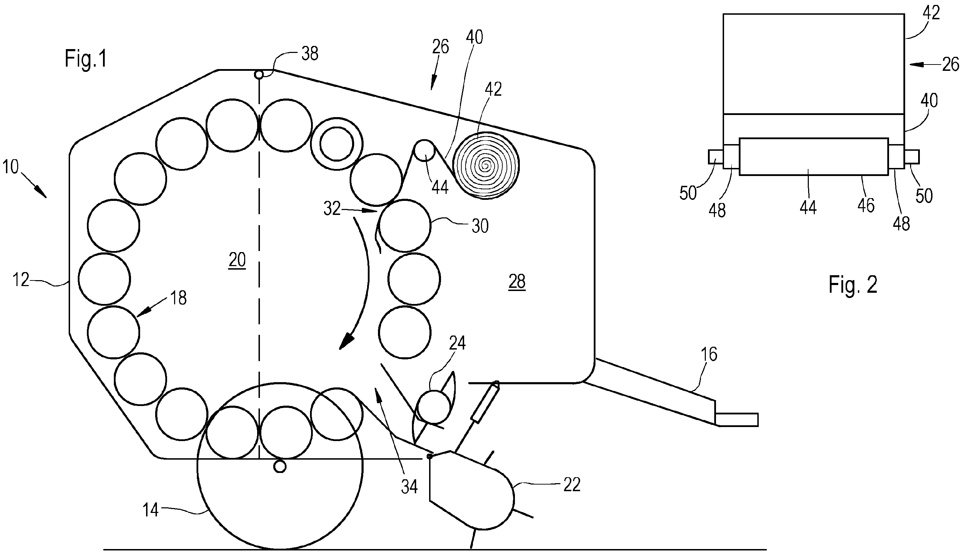

Eine in der Figur 1 schematisch dargestellte Rundballenpresse 10 enthält unter anderem ein Fahrgestell 12, Räder 14, eine Deichsel 16, Pressmittel 18, einen Ballenpressraum 20, eine Aufnahmevorrichtung 22, einen Förderer 24 und eine Hüllvorrichtung 26.

Die Rundballenpresse 10 dient der Aufnahme und dem Pressen von auf dem Boden liegendem Erntegut zu einem Ballen, nämlich einem Rundballen, wie dies an sich bekannt ist. Allerdings könnte sie auch zum Pressen von Wirtschaftsgütern wie Stoffe, Müll, Folien etc. verwendet werden.

Das Fahrgestell 12 wird von einem nicht gezeigten Schraub- und/oder Schweißzusammenbau gebildet, an dessen Unterseite sich eine nicht dargestellte Achse zur Aufnahme der Räder 14 befindet, das vorne mit der Deichsel 16 verbunden ist und seitlich Seitenwände 28 trägt. Die Räder 14 dienen der Abstützung der Rundballenpresse 10 auf dem Boden und der Fortbewegung über insbesondere ein Feld, auf dem das Pressgut abgelegt ist. Mit der Deichsel 16 kann die Rundballenpresse 10 an ein nicht gezeigtes Zugfahrzeug, z. B. an einen Ackerschlepper, angehängt werden.

Der Begriff Pressmittel 18 wird im Folgenden als Oberbegriff für alle denkbaren Ausführungen in Einzahl oder Vielzahl verwendet. Das Pressmittel 18 ist in diesem Ausführungsbeispiel als eine Vielzahl von Presswalzen 30 ausgebildet, deren Drehachsen zueinander parallel verlaufen und auf einem Kreisbogen gelegen sind. Mit der Ausnahme einer Wickelmaterialeinlassöffnung 32 und einer Ernteguteinlassöffnung 34 umschließen die Presswalzen 30 den Ballenpressraum 20 umfangsseitig im Wesentlichen vollständig. Mit Bezug auf den Uhrzeigerdrehsinn und mit Blick auf Figur 1 befindet sich die Wickelmaterialeinlassöffnung 32 ungefähr in einer 2 Uhr Stellung und die Ernteguteinlassöffnung 34 in einer 4:30 Stellung. In der Umfangsrichtung gesehen entspricht die Breite der Ernteguteinlassöffnung 34 ungefähr dem von eineinhalb Presswalzen 30. Die Lage der Wickelmaterialeinlassöffnung 32 kann variiert werden. Anstelle dieses Pressmittels 18, das vorwiegend für einen Ballenpressraum 20 mit einem konstanten Volumen geeignet ist, könnte auch ein Pressmittel 18 vorgesehen sein, das nachgiebige Elemente wie schwenkbare Presswalzen, Riemen, Ketten und dergleichen aufweist, mit denen die Größe des Ballenpressraums 20 variabel gestaltet werden kann, wie dies ebenfalls bekannt ist. Das Pressmittel 18 wird auf nicht gezeigte Weise, z. B. mittels Gelenkwelle, Getriebe und Ketten in Drehung versetzt. Der Antrieb des Pressmittels 18 erfolgt bei diesem Ausführungsbeispiel derart, dass ein Ballen in dem Ballenpressraum 20 gemäß dem dort wiedergegebenen Pfeil dreht.

Der Ballenpressraum 20 kann von fester oder variabler Größe sein und dient der Aufnahme des Pressguts und dessen Verdichtung. In herkömmlicher Weise ist der Ballenpressraum 20 in vertikaler Richtung in eine vordere und eine rückwärtige Hälfte unterteilt, die in einem oberen Lager 38 miteinander verbunden sind, so dass die rückwärtige Hälfte zum Auswerfen des Ballens angehoben werden kann. Die Aufnahmevorrichtung 22 nimmt im Betrieb auf dem Boden in einem Schwad abgelegtes Erntegut auf und führt es gegebenenfalls mit Hilfe des Förderers 24 durch den Ernteguteinlass 34 in den Ballenpressraum 20. Der Förderer 24, der auch als eine Schneidvorrichtung ausgebildet sein kann und nur wahlweise vorhanden ist, nimmt das Pressgut von der Aufnahmevorrichtung 22 an, zerkleinert es gegebenenfalls und fördert es in den Ballenpressraum 20.

Die Hüllvorrichtung 26 dient dazu, nach dem Fertigstellen eines Ballens Wickelmaterial 40 in den Ballenpressraum 20 einzuführen, wo es von der Umfangsfläche des sich drehenden Ballens erfasst und mitgenommen wird, bis es den Ballen umschlossen und somit gebunden hat. Die Hüllvorrichtung 26 enthält demgemäß einen rollenförmigen Vorrat 42 an Wickelmaterial 40, das vom Vorrat 42 abgewickelt wird und an einer Zuführwalze 44 anliegt und von dieser in die Wickelmaterialeinlassöffnung 32 gefördert wird. Die Hüllvorrichtung 26 kann zudem eine nicht gezeigte Schneideinrichtung zum Abschneiden des Endes des Wickelmaterials 40 von einem Ballen umfassen, sowie Führungsmittel zum Einführen des Anfangs des Wickelmaterials 40 in die Wickelmaterialeinlassöffnung 32. Da beide an sich bekannt sind, wird hierauf im Folgenden nicht detailliert eingegangen. Die Wickelmaterialeinlassöffnung 32 kann auch breiter als in der Figur 1 dargestellt gestaltet werden, damit das Wickelmaterial 40 problemlos in den Ballenpressraum 20 gelangen kann, ohne um die der Wickelmaterialeinlassöffnung 32 benachbarten Presswalzen 30 gewickelt zu werden.

Das Wickelmaterial 40 ist meist als ein Netz ausgebildet, kann aber auch eine Folie sein. Im Ausführungsbeispiel nach der Figur 1 ist das Wickelmaterial 40 ungefähr so breit wie ein in dem Ballenpressraum 20 gebildeter Ballen, obwohl es auch breiter sein könnte als der Ballen, um außer dessen Umfangsseite auch einen Teile dessen Stirnseite zu bedecken. Insbesondere ein als Netz ausgebildetes Wickelmaterial 40 wird beim Kontakt mit einem sich drehenden Ballen von den vorstehenden Erntegutstängeln erfasst, in dem Bereich zwischen der Ballenumfangsfläche und der Innenseite der Presswalzen 30 eingeklemmt und schließlich um den Ballen geschlungen.

Die Zuführwalze 44 fördert einerseits das Wickelmaterial 40 zu Beginn des Wickelvorgangs in den Ballenpressraum 20 hinein. Anschließend, wenn der Ballen das Wickelmaterial 40 erfasst hat, gibt sie die Geschwindigkeit vor, mit welcher der Ballen das Wickelmaterial 40 in den Ballenpressraum 20 hineinzieht. Um eine hinreichende Reibung zwischen der Zuführwalze 44 und dem Wickelmaterial 40 bereitzustellen, ist die Zuführwalze 44 in der Regel mit einem geeigneten Material, wie Gummi, beschichtet.

Wie in der Figur 2 in der Draufsicht auf die Hüllvorrichtung 26 gezeigt wird, ist die Zuführwalze 44 in sich stufenförmig gestaltet. Ihr mittiger Bereich 46 ist zylindrisch und weist einen größeren Durchmesser auf als ihre axialen Randbereiche 48, die ebenfalls zylindrisch sind. Die axiale Abmessung der zum Fördern des Wickelmaterials 40 dienenden Bereiche 4, 48 der Zuführwalze 44 stimmt mit der Breite des Wickelmaterials 40 näherungsweise überein. Die Zuführwalze 44 wird auf Achsstummeln 50, die nicht mit dem Wickelmaterial 40 in Kontakt kommen, im Fahrgestell 12 abgestützt.

Die Zuführwalze 44 wird während des Wickelvorgangs mit einer Geschwindigkeit angetrieben, die dazu führt, dass sich der mittige Bereich 46 mit einer Umfangsgeschwindigkeit dreht, die um einen bestimmten Prozentsatz kleiner als die Umfangsgeschwindigkeit der Presswalzen 30 (bzw. des Ballens) ist. Dadurch wird sichergestellt, dass das Wickelmaterial 40 mit einer hinreichenden Spannung um den Ballen gewickelt wird. In den axialen Randbereichen 48 ist die Umfangsgeschwindigkeit der Zuführwalze 44 (aufgrund des dort geringeren Durchmessers als im mittigen Bereich 46) noch geringer als im mittigen Bereich 46, was dazu führt, dass auch bei konischen oder tonnenförmigen Ballen deren Randbereiche mit hinreichender Vorspannung umwickelt werden.

## Patentansprüche

1. Rundballenpresse (10) mit einem Ballenpressraum (20), einem rollenförmigen Vorrat (42) für Wickelmaterial (40) und einer antreibbaren Zuführwalze (44), an der vom Vorrat (42) abgewickeltes Wickelmaterial (40) anliegt und die mit einer vorgegebenen Drehzahl in Drehung versetzbar und konfiguriert ist, zu Beginn des Wickelvorgangs das Wickelmaterial (40) von dem Vorrat (42) durch eine Wickelmaterialeinlassöffnung (32) in den Ballenpressraum (20) hinein zu fördern und, wenn ein Ballen das Wickelmaterial (40) erfasst hat, die Geschwindigkeit vorzugeben, mit welcher der Ballen das Wickelmaterial (40) von dem Vorrat (42) in den Ballenpressraum (20) hineinzieht, wobei die Zuführwalze (44) mit einem geeigneten Material beschichtet ist, um eine hinreichende Reibung zwischen der Zuführwalze (44) und dem Wickelmaterial (40) bereitzustellen, **dadurch gekennzeichnet, dass** die Zuführwalze (44) in ihrem axial mittigen Bereich (46) einen größeren Durchmesser als in ihren axialen Randbereichen (48) aufweist.

2. Rundballenpresse (10) nach Anspruch 1, wobei die axialen Randbereiche (48) der Zuführwalze (44) einen ersten, über ihre axiale Abmessung konstanten Durchmesser aufweisen und der mittige Bereich (46) der Zuführwalze (44) einen zweiten, über seine axiale Abmessung konstanten Durchmesser aufweist.

3. Rundballenpresse (10) nach Anspruch 1 oder 2, wobei das Wickelmaterial (40) ein Netz ist.

## Claims

1. Round baler (10) having a baling chamber (20), a reel-form store (42) of wrapping material (40) and a drivable feed roller (44), on which wrapping material (40) unwound from the store (42) rests and which is able to be set in rotation at a predetermined speed and is configured, at the beginning of the wrapping process, to deliver the wrapping material (40) from the store (42), through a wrapping-material inlet opening (32), into the baling chamber (20) and, when a bale has picked up the wrapping material (40), to specify the speed at which the bale draws the wrapping material (40) from the store (42) into the baling chamber (20), wherein the feed roller (44) is coated with a suitable material in order to provide sufficient friction between the feed roller (44) and the winding material (40), **characterized in that** the feed roller (44) has a larger diameter in its axially central region (46) than in its axial peripheral regions (48) .

2. Round baler (10) according to Claim 1, wherein the axial peripheral regions (48) of the feed roller (44) have a first diameter, which is constant over its axial dimensions, and the central region (46) of the feed roller (44) has a second diameter, which is constant over its axial dimension.

3. Round baler (10) according to Claim 1 or 2, wherein the wrapping material (40) is a mesh.

## Revendications

1. Presse à balles rondes (10), comprenant un espace de pressage de balles (20), une réserve en forme de rouleau (42) pour le matériau d'enrubannage (40) et un cylindre d'alimentation pouvant être entraîné (44), sur lequel s'applique le matériau d'enrubannage (40) déroulé de la réserve (42) et qui peut être mis en rotation avec une vitesse de rotation prédéfinie et qui est configuré pour transporter le matériau d'enrubannage (40) au début de l'opération d'enrubannage depuis la réserve (42) à travers une ouverture d'entrée de matériau d'enrubannage (32) dans l'espace de pressage de balles (20) et, lorsqu'une balle a saisi le matériau d'enrubannage (40), pour prédéfinir la vitesse à laquelle la balle tire le matériau d'enrubannage (40) de la réserve (42) dans l'espace de pressage de balles (20), le cylindre d'alimentation (44) étant revêtu d'un matériau approprié pour fournir un frottement suffisant entre le cylindre d'alimentation (44) et le matériau d'enrubannage (40), **caractérisée en ce que** le cylindre d'alimentation (44) présente, dans sa région axialement centrale (46), un plus grand diamètre que dans ses régions de bord axiales (48) .

2. Presse à balles rondes (10) selon la revendication 1, dans laquelle les régions de bord axiales (48) du cylindre d'alimentation (44) présentent un premier diamètre constant sur sa dimension axiale et la région centrale (46) du cylindre d'alimentation (44) présente un deuxième diamètre constant sur sa dimension axiale.

3. Presse à balles rondes (10) selon la revendication 1 ou 2, dans laquelle le matériau d'enrubannage (40) est un filet.
